# EUROPÄISCHE PATENTSCHRIFT

(11) **EP 0 751 877 B1**
(45) Veröffentlichungstag und Bekanntmachung des Hinweises auf die Patenterteilung: **03.12.1997**
(21) Anmeldenummer: 95935881.3
(22) Anmeldetag: 29.09.1995
(51) Int. Cl.: B60H 1/03, F01P 3/20, F02N 17/06

(54) **ZUSATZHEIZUNGS-ANORDNUNG**
ADDITIONAL HEATING SYSTEM
CONFIGURATION DE DISPOSITIF DE CHAUFFAGE ADDITIONNEL

(30) Priorität: 06.10.1994 DE 4435693
(43) Veröffentlichungstag der Anmeldung: 08.01.1997
(73) Patentinhaber: Behr GmbH & Co., 70469 Stuttgart (DE); J. Eberspächer GmbH & Co., 73730 Esslingen (DE)
(72) Erfinder: BAUER, Dieter, D-70469 Stuttgart (DE); HUMBURG, Michael, D-73035 Göppingen (DE); LÖHLE, Michael, D-73732 Esslingen (DE); PFISTER, Wolfgang, D-73732 Esslingen (DE); REISER, Peter, D-73732 Esslingen (DE); SCHWEIZER, Gebhard, D-71229 Leonberg (DE)
(74) Vertreter: Heumann, Christian
(86) Internationale Anmeldenummer: EP9503856
(87) Internationale Veröffentlichungsnummer: WO9611121

(56) Entgegenhaltungen:
- WO-A-90/10552
- DE-A- 3 125 709
- DE-A- 3 914 834
- US-A- 5 350 114

## Beschreibung

Die Erfindung bezieht sich auf die Anordnung eines Zusatzheizgerätes nach dem Oberbegriff des Patentanspruches 1.

Eine solche Anordnung für ein Zusatzheizgerät im Kühlmittelkreislauf einer Brennkraftmaschine wurde durch die EP-B-0 462 154 der Mitanmelderin bekannt. Bei dieser bekannten Anordnung ist ein Brennstoff-Heizgerät mit dem Heizkörper einer Heizungsanlage für die Beheizung des Fahrgastraumes eines Kraftfahrzeuges integriert, und zwar in der Weise, daß der kühlmittelseitige Teil des Wärmetauschers des Heizgerätes mit dem Wasserkasten des Heizkörpers in Strömungsverbindung steht, so daß die vom Heizgerät erzeugte Wärme über das Abgas an das Kühlmittel in den Heizkörper abgegeben und somit unmittelbar für die Heizung des Fahrgastraumes wirksam wird. Nachteilig bei dieser Anordnung ist, daß sowohl die Brennstoffzufuhr für das Zusatzheizgerät als auch die Abgasabfuhr vom Zusatzheizgerät durch den Fahrgastraum oder unmittelbar am Rande des Fahrgastraumes verlegt werden muß, was Sicherheitsrisiken beinhaltet. Im übrigen kann auch das Geräusch des Brenners und des Brennergebläses zu Beeinträchtigungen des Komforts im Fahrgastraum führen.

Durch die DE-A 39 14 834 wurde ein Zusatzheizgerät bekannt, welches zusätzliche Wärme mittels eines kraftstoffbetriebenen Brenners erzeugt und diese Zusatzwärme über Zwei Wärmetauscher in den Kühlmittelkreislauf einspeist. Hierzu ist ein eigens in den Heizkreislauf des Kühlmittelkreislaufes eingeschaltetes Heizgerät, bestehend aus zwei Wärmetauschern, vorgesehen, welches ausschließlich Heizzwecken dient. Aus diesem Grunde ist der Heizungs-Wärmetauscher als Wasser/Luft-Wärmetauscher ausgebildet, dessen erwärmte Luft in den Fahrzeuginnenraum geleitet wird. Nachteilig ist hierbei, daß ein zusätzliches Heizgerät mit zusätzlichen Wärmetauschern vorgesehen ist.

Aufgabe der vorliegenden Erfindung ist es, die vorgenannten Nachteile zu vermeiden und eine die Sicherheit und den Komfort nicht beeinträchtigende Anordnung für eine Zusatzheizeinrichtung zu schaffen, die sowohl die Funktion der Verkürzung der Warmlaufphase der Brennkraftmaschine als auch die Funktion der Standheizung übernehmen kann.

Die Lösung dieser Aufgabe ergibt sich aus den kennzeichnenden Merkmalen des Patentanspruchs 1. Vorteilhaft bei dieser Anordnung am Kühler bzw. an einem Kühlmodul ist, daß Sicherheitsrisiken und Geräuschbeeinträchtigungen für den Fahrgast insofern vermieden sind, als sich das Zusatzheizgerät nunmehr außerhalb der Fahrgastraumes befindet. Durch die bauliche Integration mit dem Kühlmittel/Luft-Kühler wird die gesamte Montage und auch die Zugänglichkeit des Zusatzheizgerätes vereinfacht. Weiter kann die Einbindung der Zusatzheizung in den Kühlmittelkreislauf einfacher und kostengünstig ausgeführt werden. Darüber hinaus sind die Brennstoff- und Abgasleitungen problemlos zu verlegen.

Weitere vorteilhafte Ausgestaltungen der Erfindung ergeben sich aus den Unteransprüchen, wobei die Ansprüche 2 bis 7 konstruktive Ausgestaltungen und die Ansprüche 8 bis 12 Schaltungsvarianten betreffen.

Nach den Ansprüchen 2 bis 4 ist das Zusatzheizgerät mit dem Wasserkasten des Kühlers integriert, der vorzugsweise als Querstromkühler ausgebildet ist. Dadurch ergibt sich eine räumlich günstige Anordnung des Zusatzheizgerätes - die Bauhöhe des gesamten Kühlers kann gering gehalten werden. Durch die Aufnahme des Zusatzheizgerätes in dem topfförmigen Gehäuse am Wasserkasten sind keine weiteren Befestigungsmittel erforderlich.

Gemäß Anspruch 5 sind auch keine weiteren Anschlußleitungen für das Kühlmittel erforderlich, da dieses direkt aus dem Wasserkasten in den Wärmetauscherteil des Zusatzheizgerätes eintritt.

Gemäß Anspruch 6 ist auch das Thermostatventil und die Kühler-Kurzschlußleitung (Bypass) in den Wasserkasten integriert, was zu einer weiteren Vereinfachung hinsichtlich der Kühlmitteilleitungen, zu einer kompakten Baueinheit und zu einer rationellen Montage des gesamten Kühlmoduls führt.

Gemäß Anspruch 7 ist eine Integration des Zusatzheizgerätes auch bei einem Fallstromkühler, d.h. mit senkrecht verlaufenden Rohren möglich, wenn entsprechender Bauraum zur Verfügung steht.

Gemäß den Ansprüchen 8 und 9 ist das Zusatzheizgerät zum Kühlervorlauf parallel geschaltet, d.h. ein durch eine Drossel definierter Teilstrom läuft im Bypass über das Zusatzheizgerät, erwärmt sich dort und wird dann wieder in den Kühlervorlauf eingespeist. Diese Variante ist somit selbstregelnd, d.h. ohne zusätzlichen Regelaufwand.

Gemäß Anspruch 10 ist das Zusatzheizgerät in Reihe in den Heizungsvorlauf geschaltet, wodurch die Zusatzwärme primär dem Heizkörper zugute kommt, d.h. eine schnellere und wirksamere Heizung ermöglicht, was inbesondere bei Motoren mit hohem Wirkungsgrad wie z.B. Dieselmotoren von Vorteil ist.

Gemäß Anspruch 11 ist eine zusätzliche Wasserpumpe vorgesehen, die für eine Umwälzung im Heizungsvorlauf und damit einen schnelleren Wärmetransport sorgt.

Gemäß Anspruch 12 ist durch das Umschaltventil und eine zusätzliche Zweigleitung die Möglichkeit für eine Standheizung geschaffen, die bei abgeschaltetem Motor durch die elektrische Zusatzpumpe aufrecht erhalten werden kann.

Ausführungsbeispiele der Erfindung sind in der Zeichnung dargestellt und werden im folgenden näher beschrieben.

Es zeigen:
- **Fig. 1**: ein Kühlaggregat in perspektivischer Darstellung,
- **Fig. 2**: eine erste Schaltungsanordnung für das Kühlaggregat,
- **Fig. 3**: eine zweite Schaltungsanordnung für das Kühlaggregat,
- **Fig. 4**: eine dritte Schaltungsanordnung für das Kühlaggregat im Kühlmittelkreislauf einer Brennkraftmaschine und
- **Fig. 5**: einen Wasserkasten mit integriertem Zusatzheizgerät im Schnitt.

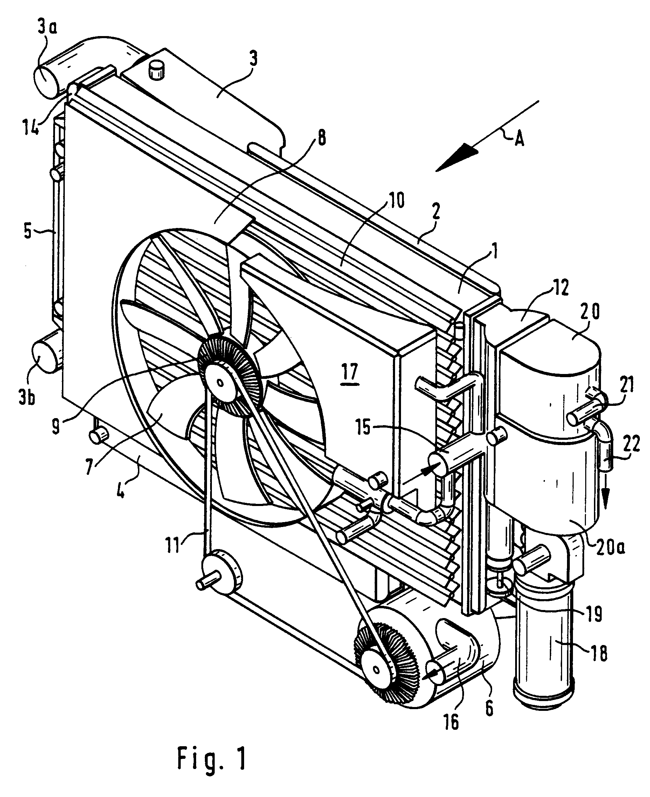

**Fig. 1** zeigt ein Kühlaggregat oder ein sogenanntes Kühlmodul, d.h. eine Anordnung von mehreren Wärmetauschern, die zu einer Baueinheit zusammengefaßt und als fertige Montageeinheit in einem Kraftfahrzeug befestigt werden. Im einzelnen handelt es sich um folgende Wärmetauscher: Kühlmittel/Luft-Kühler 1, Kältemittel/Luft-Kondensator 2, Ladeluft/Luft-Kühler 3 mit Ein- und Austrittsstutzen 3a und 3b, Getriebeöl/Kühlmittel-Kühler 5 und Motoröl/Luft-Kühler 4. Die Luftströmungsrichtung ist mit dem Pfeil A angedeutet, d.h. die Luft trifft zunächst auf den Kondensator 2 und den Ladeluft-Kühler 3, strömt dann durch den Kühlmittel-Kühler 1, hinter dem sich eine Kühlerjalousie 10 befindet, die den durchströmbaren Luftquerschnitt steuert. Am Kühlmittel-Kühler 1 ist luftabströmseitig eine Kühlerzarge 8 angeordnet, innerhalb welcher ein Lüfter 7 zur Förderung der Luft angeordnet ist. Der Lüfter 7 wird über eine Flüssigkeitsreibungskupplung 9 angetrieben, die ihrerseits von der hier nicht dargestellten Brennkraftmaschine über einen Riementrieb 11 angetrieben wird. Andere Antriebsarten für den Lüfter 7 sind möglich, z.B. der Antrieb über einen Elektromotor oder der Direktantrieb durch die Kurbelwelle. In die Lüfterzarge 8 integriert ist ferner ein beheizbarer Wischwasserbehälter 17. Die genannten Wärmetauscher sind - wie bereits erwähnt - zu einer festen Baueinheit zusammengefaßt, d.h. entweder direkt miteinander verbunden oder auf einem nicht dargestellten Modulträger befestigt, der dann seinerseits an der Karrosserie des Fahrzeugs befestigt wird. Der Kühlmittel-Kühler 1 ist als sogenannter Querstromkühler ausgebildet, d.h. er weist ein in der Zeichnung nicht erkennbarers Netz mit waagerechten Rohren und zwei seitliche Wasserkästen auf: Der rechte Wasserkasten 12 besitzt einen Eintrittsstutzen 15 für das Kühlmittel und weist unterhalb des Eintrittsstutzens 15 eine nicht dargestellte Trennwand auf. Der linke Wasserkasten ist als Umlenkwasserkasten 14 ausgebildet. Demzufolge strömt das Kühlmittel zunächst von rechts nach links (in der Zeichnung) durch die oberen Rohrreihen, wird im linken Wasserkasten 5 umgelenkt und strömt durch die unteren Rohrreihen, d.h. unterhalb der nicht dargestellten Trennwand im Wasserkasten 12 von links nach rechts zurück, wo es vom unteren Teil des Wasserkastens 12 über eine Kühlmittelpumpe 6 abgesaugt wird und die Kühlmittelpumpe über einen Austrittsstutzen 16 verläßt. Schließlich weist das Kühlaggregat noch einen Flüssigkeitsbehälter 18 für Kältemittel mit integriertem Trockner sowie einen Kühlmittelthermostat 19 auf, welcher ebenfalls in den Wasserkasten 12 integriert ist. Die einzelnen Wärmetauscher sind bis auf den Getriebeöl-Kühler also luftgekühlt - letzterer ist in den Wasserkasten 5 eingesetzt und wird sekundärseitig vom Kühlmittel beaufschlagt.

Erfindungsgemäß ist ein Zusatzheizgerät 20, 20a mit Brennstoffheizung und Abgas/Kühlmittel-Wärmetauscher, wie es im Prinzip aus der EP-B-0 462 154 der Mitanmelderin bekannt ist, mit dem Wasserkasten 12 mechanisch und strömungsmäßig verbunden, d.h. zu einer Baueinheit integriert. In der Zeichnung ist das Zusatzheizgerät zweiteilig dargestellt, wobei der obere Teil 20 im wesentlichen den Brenner und der untere Teil 20a den Wärmetauscher beinhaltet. Die Anschlußleitungen für das Kühlmittel, welches in dem Zusatzheizgerät (Wärmetauscherteil) 20a aufgewärmt wird, sind nicht dargestellt und befinden sich im Inneren des Wasserkastens 12. Sie entsprechen im Prinzip dem vorgenannten Stand der Technik. An dem Zusatzheizgerät 20 befinden sich ein Anschluß 21 für die Brennluft und ein Stutzen 22 für den Austritt des Abgases. Die Brennstoffzufuhr für das Zusatzheizgerät 20 ist in der Zeichnung nicht dargestellt.

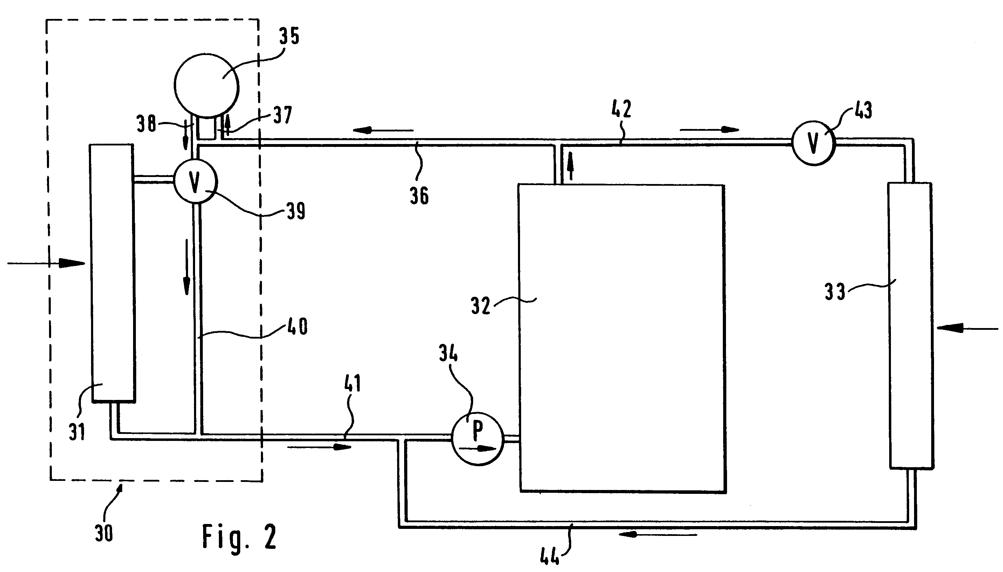

**Fig. 2** zeigt in schematischer Darstellung die Einbindung bzw. strömungstechnische Anordnung des Zusatzheizgerätes in den Kühlmittelkreislauf einer Brennkraftmaschine. Das Zusatzheizgerät 20 aus Fig. 1 ist hier mit der Bezugsziffer 35 gekennzeichnet, die den kühlmittelseitigen Teil des Wärmetauschers dieses Gerätes bezeichnet. Das gesamte Kühlaggregat - entsprechend Fig. 1 - ist vereinfacht in dem gestrichelten Rechteck dargestellt und umfaßt den Kühler 31, das Zusatzheizgerät 35, einen Thermostaten 39 und eine Kurzschlußleitung 40. Der Kühlmittelkreislauf für die Brennkraftmaschine 32 weist einen Kühlervorlauf 36 und einen Kühlerrücklauf 41 auf, der über eine Kühlmittelpumpe 34 wieder zur Brennkraftmaschine 32 zurückgeführt wird. Parallel zu diesem "Kühlkreislauf" ist ein Heizungskreislauf vorgesehen, bestehend aus einem Heizungsvorlauf 42 mit Heizungsventil 43, Heizkörper 33 und Heizungsrücklauf 44. Die Kühlmittelseite 35 des Zusatzheizgerätes ist parallel zum Kühlervorlauf 36 geschaltet, und zwar über einen Zulauf 37, in welchem sich eine Festdrossel zur Teilstromsteuerung befindet, und über einen Rücklauf 38. Somit strömt eine bestimmte feste Kühlmittelmenge über das Zusatzheizgerät und erwärmt somit das Kühlmittel, d.h. bei geschlossenem Thermostat 39 tritt erwärmtes Kühlmittel in die Kurzschlußleitung 40 und strömt von dort über den Kühlerrücklauf 41 und die Pumpe 34 in den Kühlmantel der Brennkraftmaschine 32, die somit schneller erwärmt wird. Darüber hinaus gelangt die durch das Zusatzheizgerät 35 erwärmte Kühlmittelmenge über den Heizungsvorlauf 42 in den Heizkörper 33, wodurch Defizite in der Heizleistung, z.B. von modernen TDI-Motoren, ausgeglichen werden und/oder die Erwärmung beschleunigt wird - damit wird die Beheizung des Fahrgastraumes verbessert.

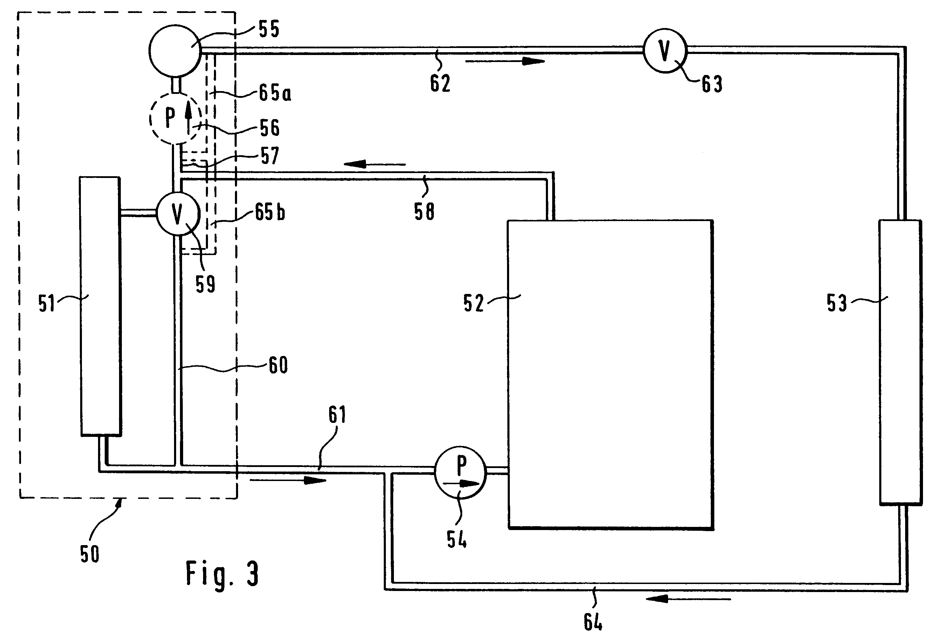

**Fig. 3** zeigt eine weitere Variante für die Anordnung des Zusatzheizgerätes 55 im Kühlmittelkreislauf der Brennkraftmaschine 52. Das Kühlaggregat ist hier wiederum durch ein gestricheltes Rechteck 50 angedeutet und enthält den Kühler 51, das Zusatzheizgerät 55, fakultativ eine elektrische Wasserpumpe 56 sowie ein Thermostatventil 59 mit Kurzschlußbypass 60. Der eigentliche Kühlkreislauf besteht aus dem Kühlervorlauf 58 und dem Kühlerrücklauf 61 einschließlich Kühlmittelpumpe 54. Der Heizkreislauf dagegen besteht aus dem Heizungsvorlauf 62, einem Heizungsventil 63, einem Heizkörper 53 und dem Heizungsrücklauf 64. Das Zusatzheizgerät 55 ist hier also über die Abzweigleitung 57 mit der wahlweise vorzusehenden elektrischen Wasserpumpe 56 in Reihe in den Heizungsvorlauf 62 geschaltet. Durch eine Rücklaufleitung 65a oder 65b wird eine Minimaldurchströmung des Zusatzheizgerätes bei geschlossenem Ventil 63 für eine sichere Abschaltung bei Überhitzung gewährleistet.

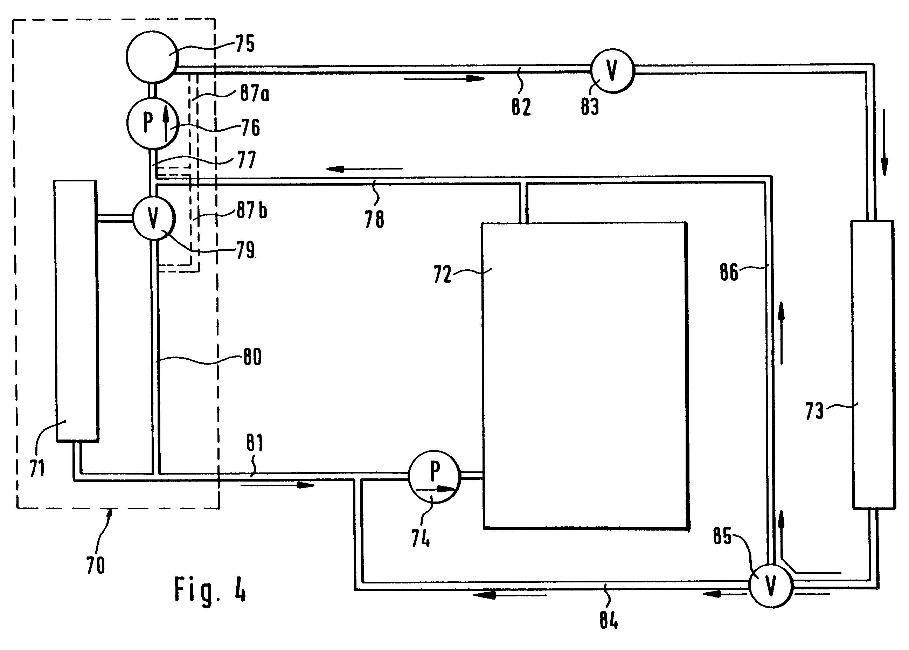

**Fig. 4** zeigt eine letzte Variante für die Anordnung des Zusatzheizgerätes 75 im Kühlmittelkreislauf der Brennkraftmaschine 72, wobei das Kühlaggregat wiederum als gestricheltes Rechteck 70 mit seinen Komponenten wie Kühler 71, Thermostat 79, elektrische Wasserpumpe 76 und Bypass 80 angedeutet ist. Der den Kühler 71 einschließende Kühlkreislauf weist einen Kühlervorlauf 78 und einen Kühlerrücklauf 81 mit Kühlmittelpumpe 74 auf. Parallel zu diesem Kühlkreislauf ist ein Heizungskreislauf geschaltet, und zwar mit einem Heizungsvorlauf 82, Heizungsventil 83, Heizkörper 73 und Heizungsrücklauf 84, der vor der Kühlmittelpumpe 74 in den Kühlerrücklauf 81 mündet. Schließlich ist zusätzlich (in Ergänzung des Ausführungsbeispieles gemäß Fig. 3) eine Zweigleitung 86 vorgesehen, die über ein Magnetventil 85 geöffnet oder geschlossen werden kann. Für den Zweck einer Standheizung für das Fahrzeug ist dieses Ventil 85 im stromlosen Zustand zur Leitung 86 geöffnet und zur Leitung 84 geschlossen, d.h. die elektrische Wasserpumpe 76 fördert im Zusatzheizgerät 75 erwärmtes Wasser über den Heizungsvorlauf 82 durch den Heizkörper 73, über die Zweigleitung 86 in den Kühlervorlauf, und von dort bei geschlossenem Thermostat 79 über die Abzweigleitung 77 wieder vor die Wasserpumpe 76. Ist das Ventil 85 von Strom beaufschlagt, so ist die Leitung 86 abgetrennt, und das Kühlmittel strömt aus dem Heizkörper 73 in den Heizungsrücklauf 84, so daß damit die auch bei den vorangegangenen Ausführungsbeispielen vorhandene sogenannte Zuheizfunktion erfüllt wird. Analog dem vorhergehenden Ausführungsbeispiel ist auch hier eine Rücklaufleitung 87a oder 87b vorgesehen.

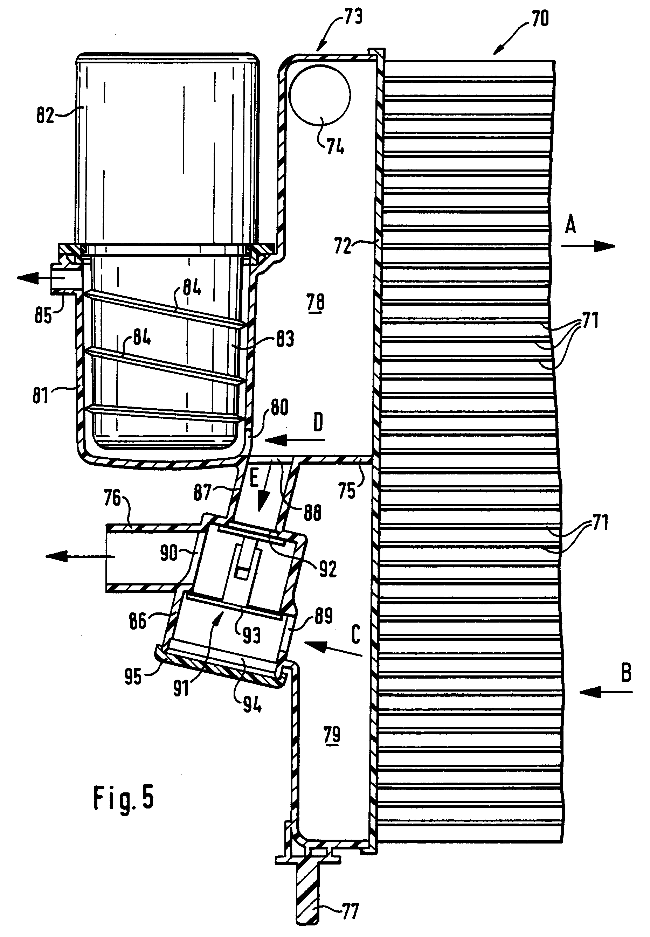

**Fig. 5** zeigt eine Schnittdarstellung für einen Wasserkasten mit integriertem Zusatzheizgerät, wie es in Fig. 1 in perspektivischer Darstellung gezeigt ist. Im folgenden werden für übereinstimmende Teile die Bezugszeichen aus Fig. 1 in Klammern gesetzt. Fig. 5 zeigt den linken äußeren Teil eines Querstomkühlers 70 (1), dessen Rohre 71 in einen Rohrboden 72 münden, der mit einem Wasserkasten 73 (12) dicht verbunden ist. Der Wasserkasten 73, der vorzugsweise als gespritztes Kunststoffteil hergestellt ist, weist einen Eintrittsstutzen 74 (15), eine Trennwand 75 und einen Austrittsstutzen 76 (16) auf. Der Kühler 70 ist somit als Querstromkühler mit horizontal liegenden Rohren 71 ausgebildet und ist über entsprechende Befestigungsmittel an der Fahrzeugkarosserie befestigt - beispielhaft für ein solches Befestigungsmittel ist ein am Wasserkasten 73 angespritzter Zapfen 77 dargestellt. Der gesamte Wasserkasten 73 ist durch die Trennwand 75 in eine obere Zulaufkammer 78 und eine untere Ablaufkammer 79 unterteilt, wobei an die obere Kammer 78 über eine Zuströmöffnung 80 ein topfförmiges Gehäuse 81 angeschlossen ist, welches einstückig mit dem Wasserkasten 73 ausgebildet ist und das Zusatzheizgerät 82/83 (20/20a) aufnimmt. Der untere Teil des Zusatzheizgerätes ist als Wärmetauscher 83 ausgebildet und weist auf seinem Außenmantel spiralförmig angeordnete Rippen 84 zur Leitung des Kühlmittels von der am Topfboden angeordneten Eintrittsöffnung 80 nach oben auf, wo ein Austrittsstutzen 85 angeordnet ist. Im Bereich der unteren Kammer 79 ist ein Thermostatgehäuse 86 angeordnet, welches über ein an der Trennwand 75 ansetzendes Kurzschluß- bzw. Bypassrohrstück 87 mit der oberen Kammer 78 verbunden ist. Ferner sind in dem Thermostatgehäuse 86 zusätzlich eine Zuströmöffnung 89 von der unteren Kammer 79 her und eine Abströmöffnung 90 zum Austrittsstutzen 76 vorgesehen. Innerhalb des Thermostatgehäuses 86 befindet sich ein an sich bekanntes Thermostatventil 91, welches mit seinen beiden Ventiltellern 92, 93 entweder den Kurzschluß 87 verschließt oder freigibt oder den Zulauf 89 von der unteren Kammer 79.

Das Thermostatgehäuse 86 sowie der Kurzschlußstutzen 87 sind spritztechnisch so ausgestaltet, daß sie in einem Stück mit dem Wasserkasten 73 hergestellt werden können, wobei zum Ausformen eine Öffnung 94 vorgesehen ist, die anschließend mittels eines Deckels 95 verschlossen wird. Somit sind also sowohl das Zusatzheizgerät 82/83 als auch der Thermostat 91 und der Kühler-Kurzschluß 87 in den Wasserkasten 73 integriert.

Die Funktion dieses Kühlers mit Zusatzheizgerät ist die folgende: Das in die obere Kammer 78 durch den Eintrittsstutzen 74 eintretende Kühlmittel durchströmt zunächst in Richtung des Pfeiles A die obere Hälfte des Rohrbündels 71, wird in einen rechten nicht dargestellten Wasserkasten umgelenkt und strömt dann entsprechend der Richtung des Pfeiles B durch die untere Hälfte des Rohrbündels 71 zurück in die untere Kammer 79 des Wasserkastens 73. Letzteres gilt für den Fall, daß das Kühlmittel bereits erwärmt ist und der Thermostat 91 den Kurzschluß 87 durch den Kurzschlußventilteller 92 verschließt - dann öffnet der Ventilteller 93 den Durchflußquerschnitt, so daß das Kühlmittel über die Öffnung 89 in Richtung des Pfeiles C in das Innere des Thermostatgehäuses gelangt und von dort über die Austrittsöffnung 90 zum Austrittsstutzen 76 strömt. Wenn das Kühlmittel noch nicht erwärmt ist, ist der Kurzschluß 87 geöffnet, d.h. der Kurzschlußventilteller 92 von seinem Ventilsitz abgehoben, und der Ventilteller 93 verschließt den Rückflußquerschnitt. Der Kühler wird in diesem Betriebszustand nicht vom Kühlmittel durchströmt, da das Kühlmittel in Richtung des Pfeiles E durch den Bypass 87 strömt.

Ein Teilstrom des Kühlmittels wird erfindungsgemäß aus der oberen Kammer 78 abgezweigt und tritt in Richtung des Pfeiles D durch die Überströmöffnung 80 in den Spalt zwischen dem äußeren Mantel des Wärmetauschers 83 und der inneren Wand des Topfes 81 ein, umströmt den Wärmetauscher 83 aufgrund der spiralförmig angeordneten Rippen 84 auf einem entsprechenden Weg nach oben und tritt durch den Austrittsstutzen 85 erwärmt wieder aus. Dieses erwärmte Kühlmittel wird dann - je nach Schaltungsanordnung - entweder direkt dem Kühlmantel der Brennkraftmaschine oder der Fahrzeugheizung zugeführt.

## Patentansprüche

1. Anordnung eines Zusatzheizgerätes (20, 20a, 82, 83) für den Kühlmittelkreislauf einer Brennkraftmaschine (32) eines Kraftfahrzeuges, wobei im aus **Kühl- und Heizkreislauf bestehenden** Kühlmittelkreislauf einerseits ein Kühlmittel/Luft-Kühler (1, 70) für die Kühlung der Brennkraftmaschine (32) **im Kühlkreislauf** und andererseits ein Kühlmittel/Luft-Heizkörper (33) für die Beheizung des Fahrgastraumes **im Heizkreislauf** vorgesehen sind, **dadurch gekennzeichnet,** daß das Zusatzheizgerät (20, 20a; 82, 83) in den Kühlmittel/Luft-Kühler (1, 70) integriert ist.

2. Anordnung nach Anspruch 1, **dadurch gekennzeichnet,** daß der Kühlmittel/Luft-Kühler (1, 70) mindestens einen Wasserkasten (12, 73) aufweist, mit dem das Zusatzheizgerät (20, 20a; 82, 83) eine Baueinheit bildet.

3. Anordnung nach Anspruch 1 oder 2, **dadurch gekennzeichnet,** daß der Kühlmittel/Luft-Kühler als Querstromkühler (1, 70) mit seitlich angeordneten Wasserkästen (12, 14, 73) ausgebildet ist.

4. Anordnung nach Anspruch 2 oder 3, **dadurch gekennzeichnet,** daß das Zusatzheizgerät (20, 20a; 82, 83) in einem topfförmig, einstückig mit dem Wasserkasten (73) ausgebildeten Gehäuse (81) angeordnet und befestigt ist.

5. Anordnung nach Anspruch 4, **dadurch gekennzeichnet,** daß das topfförmige Gehäuse (81) den vom Kühlmittel umspülten Wärmetauscherteil (83) des Zusatzheizgerätes (82) aufnimmt, wobei das Kühlmittel über eine Eintrittsöffnung (80) eintritt und über einen Austrittsstutzen (85) aus dem topfförmigen Gehäuse (81) austritt.

6. Anordnung nach einem der vorhergehenden Ansprüche 2 bis 5, **dadurch gekennzeichnet,** daß der Wasserkasten (73) eine Trennwand (75) mit einer Überströmöffnung (88), eine obere Kammer (78) mit einem Eintrittsstutzen (74), eine untere Kammer (79) mit einem Austrittsstzutzen (76) sowie ein mit dem Wasserkasten (73) einstückig ausgebildetes Thermostatgehäuse (86) aufweist, welches ein Thermostatventil (91) aufnimmt und über einen integrierten Kurzschluß (87) mit der oberen Kammer (78), über eine Zulauföffnung (89) mit der unteren Kammer (79) und mit dem Austrittsstutzen (76) verbunden ist.

7. Anordnung nach Anspruch 1 oder 2**, dadurch gekennzeichnet,** daß der Kühlmittel-/Luftkühler als Fallstromkühler ausgebildet ist.

8. Anordnung nach einem der vorhergehenden Ansprüche **dadurch gekennzeichnet,** daß das Zusatzheizgerät (20a, 35) kühlmittelseitig parallel zum Kühlervorlauf (36) geschaltet ist.

9. Anordnung nach Anspruch 8, **dadurch gekennzeichnet,** daß im Zulauf zum Zusatzheizgerät (20a, 35) eine Festdrossel (37) zur Teilstromsteuerung angeordnet ist.

10. Anordnung nach einem der Ansprüche 1 bis **7 dadurch gekennzeichnet,** daß das Zusatzheizgerät (20a, 55) in Reihe in den Heizungsvorlauf (62) geschaltet ist.

11. Anordnung nach Anspruch 10, **dadurch gekennzeichnet,** daß in den Heizungsvorlauf (62) eine elektrische Wasserpumpe (56) geschaltet ist.

12. Anordnung nach Anspruch 11, **dadurch gekennzeichnet,** daß im Heizungsrücklauf (84) zwischen Heizkörper (73) und Kühlmittelpumpe (74) ein Umschaltventil (85) angeordnet ist, welches entweder den Heizungsrücklauf (84) freigibt oder den Heizungsrücklauf (84) sperrt und eine Zweigleitung (86) freigibt, die in den Kühlervorlauf (78) mündet und zur elektrischen Zusatzwasserpumpe (76) führt.

## Claims

1. An arrangement of an auxiliary heater (20, 20a; 83, 83) for the cooling circuit of an internal combustion engine (32) of a motor vehicle, whereby there is in the cooling circuit, consisting of cooling and heating circuit, a coolant/air cooler (1, 70) for cooling the internal combustion engine (2) on the one hand and, on the other, there is in the heating circuit a coolant/air heater (33) for heating the passenger compartment, characterised in that the auxiliary heater (20, 20a; 82, 83) is integrated into the coolant/air cooler (1, 70).

2. An arrangement according to claim 1, characterised in that the coolant/air cooler (1, 70) comprises at lest one water tank (12, 72), with which the auxiliary heater (20, 20a; 82, 83) forms one component unit.

3. An arrangement according to claim 1 or 2, characterised in that the coolant/air cooler is constructed as a cross-flow cooler (1, 70) with laterally disposed water tanks (12, 14, 73).

4. An arrangement according to claim 2 or 3, characterised in that the auxiliary heater (20, 20a; 82, 83) is disposed and fixed in a pot-shaped housing (81) constructed in one piece with the water tank (73).

5. An arrangement according to claim 4, characterised in that the pot-shaped housing (81) accommodates the heat exchanger part (83) of the auxiliary heater (82), and around which the coolant flows, whereby the coolant enters through an intake aperture (80) and emerges from the pot-shaped housing (81) via an outlet connector (85).

6. An arrangement according to one of the preceding claims 2 to 5, characterised in that the water tank (73) comprises a separating wall (75) with an overflow orifice (88), an upper chamber (78) with an intake connector (74), a bottom chamber (79) with an outlet connector (76) and, constructed in one piece with the water tank (73), a thermostat housing (86) which accommodates a thermostatic valve (91) and which is connected via an integral bypass (87) to the upper chamber (78) and via a feeder aperture (89) to the bottom chamber (79) and to the outlet connector (76).

7. An arrangement according to claim 1 or 2, characterised in that the coolant/air cooler is constructed as a gravity flow cooler.

8. An arrangement according to one of the preceding claims, characterised in that the auxiliary heater (20a, 35) is on the coolant side connected in parallel with the cooler feed (36).

9. An arrangement according to claim 8, characterised in that there is in the feed to the auxiliary heater (20a, 35) a fixed throttle (37) for partial flow control.

10. An arrangement according to one of claims 1 to 7, characterised in that the auxiliary heater (20a, 55) is connected in series in the heater feed (62).

11. An arrangement according to claim 10, characterised in that an electric water pump (56) is connected into the heater feed (62).

12. An arrangement according to claim 11, characterised in that there is in the heater return (84) between the heater (73) and the coolant pump (74) a switch-over valve (85) which either opens the heater return (84) or closes the heater return (84) and opens a branch type (86) which opens out into the cooler feed (78) and leads to the electric water pump (76).

## Revendications

1. Agencement d'un appareil de chauffage additionnel (20, 20a, 82, 83) pour le circuit de refroidissement d'un moteur à combustion interne (32) d'un véhicule automobile, dans lequel sont prévus, dans le circuit de fluide de refroidissement constitué par un circuit de refroidissement et de chauffage, d'une part, un radiateur fluide de refroidissement/air (1, 70) pour le refroidissement du moteur à combustion interne (32) intercalé dans le circuit de refroidissement et, d'autre part, un corps de chauffe fluide de refroidissement/air (33) servant pour le chauffage de l'habitacle, intercalé dans le circuit de chauffage, caractérisé en ce que l'appareil de chauffage additionnel (20, 20a, 82, 83) est intégré dans le radiateur fluide de refroidissement/air (1, 70).

2. Agencement selon la revendication 1, caractérisé en ce que le radiateur fluide de refroidissement/air (1, 70) présente au moins une caisse à eau (12, 73) avec laquelle l'appareil de chauffage additionnel (20, 20a, 82, 83) forme un sous-ensemble.

3. Agencement selon la revendication 1 ou 2, caractérisé en ce crue le radiateur fluide de refroidissement/air est constitué par un radiateur à courant transversal (1, 70) possédant des caisses à eau (12, 14, 73) disposées latéralement.

4. Agencement selon la revendication 2 ou 3, caractérisé en ce que l'appareil de chauffage additionnel (20, 20a, 82, 83) est disposé et fixé dans un boîtier (81) en forme de pot, formé en une seule pièce avec la caisse à eau (73).

5. Agencement selon la revendication 4, caractérisé en ce que le boîtier (81) en forme de pot renferme la partie échangeur de chaleur (83) de l'appareil de chauffage additionnel (82) qui est léchée par le fluide de refroidissement, le fluide de refroidissement entrant par une ouverture d'entrée (80) et sortant du boîtier (81) en forme de pot par une tubulure de sortie (85).

6. Agencement selon une des revendications précédentes, caractérisé en ce que la caisse à eau (73) possède une cloison (75) munie d'une ouverture de transfert (88), une chambre supérieure (78) munie d'une tubulure d'entrée (74), une chambre inférieure (79) munie d'une tubulure de sortie (76), ainsi qu'un boîtier de thermostat (86) formé en une seule pièce avec la caisse à eau (73), qui renferme une soupape thermostatique (91) et est relié à la chambre supérieure (78) par un court-circuit intégré (87), à la chambre inférieure (79) par une ouverture d'arrivée (89) et à la tubulure de sortie (76).

7. Agencement selon la revendication 1 ou 2, caractérisé en ce que le radiateur fluide de refroidissement/air est constitué par un radiateur à écoulement descendant.

8. Agencement selon une des revendications précédentes, caractérisé en ce que l'appareil de chauffage additionnel (20a, 35) est branché en parallèle avec la conduite d'arrivée au radiateur (36) pour la circulation du fluide de refroidissement.

9. Agencement selon la revendication 8, caractérisé en ce qu'un étranglement fixe (37) servant pour la commande du courant partiel est agencé dans la conduite d'arrivée à l'appareil de chauffage additionnel (20a, 35).

10. Agencement selon une des revendications 1 à 7, caractérisé en ce que l'appareil de chauffage additionnel (20a, 55) est branché en série dans la conduite d'arrivée au chauffage (62).

11. Agencement selon la revendication 10, caractérisé en ce qu'une pompe à eau électrique (56) est branchée dans la conduite d'arrivée au chauffage (62).

12. Agencement selon la revendication 11, caractérisé en ce que, dans la conduite de retour du chauffage (84), entre le corps de chauffe (73) et la pompe à fluide de refroidissement (74), est intercalée une soupape d'inversion (85) qui, soit libère la conduite de retour du chauffage (84), soit ferme la conduite de retour du chauffage (84) et libère une conduite de dérivation (86) qui débouche dans la conduite d'arrivée au radiateur (78) et mène à la pompe à eau électrique (76).
